# EUROPÄISCHE PATENTANMELDUNG

(11) **EP 1 090 806 A2**
(43) Veröffentlichungstag der Anmeldung: **11.04.2001**
(21) Anmeldenummer: 00121765.2
(22) Anmeldetag: 05.10.2000
(51) Int. Cl.: B60N 3/00

(54) **Handyhalterung zur Montage in einem Kraftfahrzeug**

(30) Priorität: 07.10.1999 DE 19948357
(71) Anmelder: SIEMENS AKTIENGESELLSCHAFT, 80333 München (DE)
(72) Erfinder: Stögmüller, Rupert, 81739 München (DE)

(57) **Zusammenfassung**

Die Erfindung betrifft eine Handyhalterung zur Montage in einer Fahrgastzelle eines Kraftfahrzeugs, mit mindestens einer Aufnahmeschale (4) und mindestens einem Mittel zur Befestigung der Handyhalterung im Kraftfahrzeug, insbesondere an einem Armaturenbrett oder einer Konsole.

Die Erfindung zeichnet sich dadurch aus, daß eine Verbindung zwischen dem mindestens einen Mittel zur Befestigung der Halterung und der Aufnahmeschale (4) eine Sollbruchstelle aufweist.

## Beschreibung

Die Erfindung betrifft eine Handyhalterung zur Montage in einer Fahrgastzelle eines Kraftfahrzeugs, mit mindestens einer Aufnahmeschale und mindestens einem Mittel zur Befestigung der Handyhalterung im Kraftfahrzeug, insbesondere an einem Armaturenbrett oder einer Konsole.

Aus der Praxis bekannte Handyhalterungen besitzen eine Aufnahmeschale für ein Handy, sowie ein Mittel, durch das die Halterung auf einer Konsole oder einem Armaturenbrett befestigt werden kann. Zur Sicherheit der Fahrzeuginsassen des Kraftfahrzeugs weist diese Handyhalterung äußere Kantenradien auf, die so groß sind, daß das Verletzungsrisiko, beispielsweise bezüglich Schnittverletzungen, verringert werden kann.

Nachteilig bei diesen Handyhalterungen ist, daß durch die außengelegenen großen Kantenradien die Gestaltung der Form sehr stark festgelegt ist. Die Halterungen wirken hierdurch unförmig und plump.

Es ist daher Aufgabe der Erfindung, eine Handyhalterung zu entwickeln, die einerseits das Verletzungsrisiko der Fahrzeuginsassen verringert und andererseits eine weitestgehend freie Gestaltung der äußeren Form der Handyhalterung ermöglicht.

Diese Aufgabe wird durch die Merkmale des ersten Anspruches gelöst.

Demgemäß schlägt der Erfinder vor, eine Handyhalterung zur Montage in einem Kraftfahrzeug, mit mindestens einer Aufnahmeschale und mindestens einem Mittel zur Befestigung der Handyhalterung im Kraftfahrzeug, insbesondere an einem Armaturenbrett oder einer Konsole dahingehend zu verbessern, daß eine Verbindung zwischen dem mindestens einen Mittel zur Befestigung der Halterung und der Aufnahmeschale eine Sollbruchstelle aufweist.

Somit kann der Teil der Handyhalterung, der an dieser Sollbruchstelle bei einer Mindestlast abbricht, mit kleinen beziehungsweise relativ scharfen außengelegene Kantenradien ausgestattet sein, ohne daß die Sicherheit der Fahrzeuginsassen hierdurch gefährdet ist.

Hierbei kann die Sollbruchstelle durch eine Kerbe definiert werden, die bewirkt, daß bei einer definierten Mindestlast der zur Fahrgastzelle gelegene Teil der Handyhalterung von dem ein- oder mehrteiligen Mittel zur Befestigung abbricht. Zu dem zur Fahrgastzelle gelegenen Teil der Handyhalterung gehören im Sinne dieser Schrift alle Teile der Handyhalterung, die an der Montageplatte befestigt sind.

Die Verbindung zwischen dem Befestigungsmittel und der Aufnahmeschale kann an der Oberseite und/oder an der Unterseite die Kerbe aufweisen. Darüber hinaus kann die Sollbruchstelle zum Beispiel durch eine Nahtstelle definiert werden.

Die erfindungsgemäße Ausgestaltung der Handyhalterung kann vorsehen, daß die Verbindung zwischen dem Mittel zur Befestigung der Halterung und der Aufnahmeschale einen Schraubdom aufweist. Dieser Schraubdom kann mit den restlichen Teilen der Handyhalterung von der Montageplatte abbrechen.

Des weiteren schlägt der Erfinder vor, daß das Mittel zur Befestigung der Halterung außengelegene Kanten mit ausreichend großen Radien, vorzugsweise Radien größer 3,2 mm, aufweist, um ein Verletzungsrisiko der Fahrzeuginsassen, insbesondere bezüglich Schnittwunden, weiter zu verringern. Hierbei sind als außengelegene Kanten die Kanten bezeichnet, die an der Handyhalterung von der Fahrgastzelle aus, beispielsweise bei einem Unfall von den Insassen berührt werden können.

Nach dem Abbrechen des zur Fahrgastzelle gelegenen Teils der Handyhalterung an der Solibruchstelle verbleibt das Befestigungsmittel am Fahrzeug befestigt. Durch die großen außengelegenen Kantenradien des Befestigungsmittels besteht für die Insassen ein geringeres Verletzungsrisiko, beispielsweise bezüglich Schnittverletzungen.

An den Teil der Handyhalterung, der bei einer definierten Mindestlast an der Sollbruchstelle abbricht, sind jedoch keine speziellen Anforderungen an die außengelegenen Kantenradien gestellt. Dieser Teil der Handyhalterung, zu dem auch die Aufnahmeschale gehört, kann nun frei gestaltet werden, passend zum jeweiligen Handytyp. Somit kann der aus der Praxis bekannte Nachteil, die starke Festlegung der Gestaltungsform der Handyhalterung vermieden werden.

Eine besondere Ausgestaltung der Handyhalterung kann vorsehen, daß das mindestens eine Mittel zur Befestigung der Halterung eine Montageplatte darstellt. Bricht der zur Fahrgastzelle gelegene Teil der Handyhalterung an der Sollbruchstelle von der Montageplatte ab, so geht für die Fahrzeuginsassen von der im Fahrzeug verbleibenden Montageplatte keine Gefährdung bezüglich Schnittverletzungen aus, da alle außengelegenen Kanten der Montageplatte große Radien aufweisen.

Weiterhin kann der zur Fahrgastzelle gelegene Teil der Handyhalterung ein Mittel zur Winkeleinstellung aufweisen. Hierdurch kann der Benutzer je nach Wunsch, Sitzposition und praktischer Handhabung die Halterung nach seinen Bedürfnissen einstellen. Beispielsweise kann die Handyhalterung mit der Vorderseite des Handys zum Fahrzeughalter gedreht oder gekippt werden, um einen guten Einblick auf das Display und die Tastatur zu gewähren.

In einer bevorzugten Ausführung der Erfindung kann das Mittel zur Winkeleinstellung einen Kugelkopfadapter aufweisen. Hierdurch ist nicht nur ein Kippen nach rechts oder links und oben oder unten erlaubt, sondern eine Drehung der Halterung in eine beliebige Position möglich.

Weiterhin kann der zur Fahrgastzelle gelegene Teil der Handyhalterung ein Klemmelement zur Stabilisierung des Kugelkopfadapters aufweisen. Das Klemmelement kann zum Beispiel ein Herausspringen des Kugelkopfadapters aus der Handyhalterung verhindern.

Der zur Fahrgastzelle gelegene Teil der Handyhalterung kann ein Zwischenelement aufweisen, mit einer standardisierten Schnittstelle zur Befestigung der Aufnahmeschale des Handys. Diese standardisierte Schnittstelle kann eine mechanische Schnittstelle in Form eines erhöhten Dreieckes aufweisen, das durch eine entsprechende Aussparung in der Aufnahmeschale greift. Aufgrund der Standardisierung wird ein Aufbringen unterschiedlich gestalteter Aufnahmeschalen, die lediglich zur Verankerung die zur Schnittstelle passende Aussparung aufweisen sollten, ermöglicht. Zur Verriegelung der Aufnahmeschale auf dem Zwischenelement kann die Aufnabmeschale parallel zur Montageebene translatorisch verschoben werden.

Weiterhin kann das Handy direkt an dieser standardisierten Schnittstelle befestigt werden. Allerdings ist zu beachten, daß hierfür eine relativ große Öffnung im Gehäuse des Handys benötigt wird.

Weitere Merkmale der Erfindung ergeben sich aus der nachfolgenden Beschreibung bevorzugter Ausführungsbeispiele unter Bezugnahme auf die Zeichnungen.

Im folgenden wird eine bevorzugte Ausführung der Erfindung beschrieben. Es zeigen:
- Figur 1:: Einzelkomponenten der erfindungsgemäßen Handyhalterung
- Figur 2:: Querschnitt der Montageplatte und des Schraubdomes mit Sollbruchstellen
- Figur 3:: Sollbruchstelle
- Figur 4:: Zusammengebaute Handyhalterung, Seitenansicht auf die Schmalseite
- Figur 5:: Zusammengebaute Handyhalterung, Seitenansicht auf die Breitseite
- Figur 6:: Zusammengebaute Handyhalterung, Draufsicht
- Figur 7:: Zusammengebaute Handyhalterung, Sicht von schräg oben

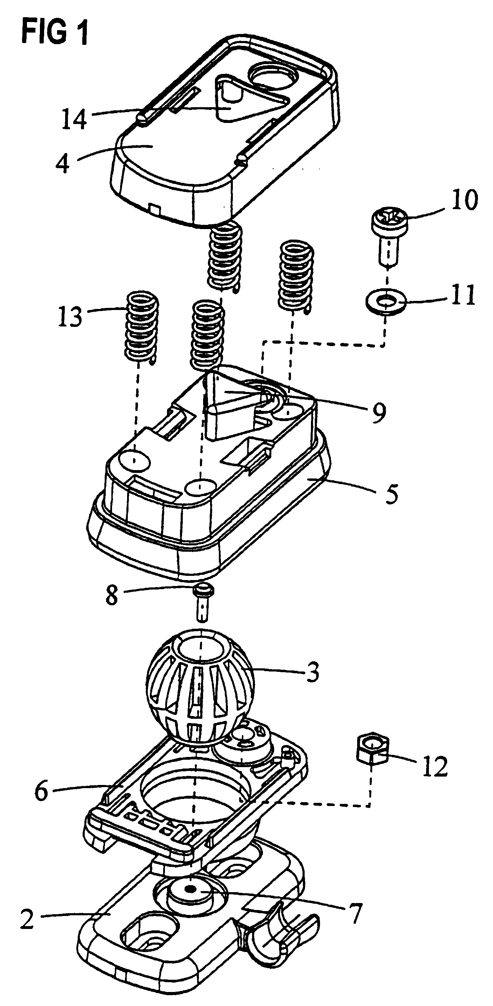

Figur 1 zeigt eine Explosionszeichnung der erfindungsgemäßen Handyhalterung mit den Einzelkomponenten.

Die Handyhalterung enthält eine Montageplatte 2, ein Klemmelement 6, ein Zwischenelement 5, einen Kugelkopfadapter 3, der zwischen der Montageplatte 2 und dem Zwischenelement 5 angeordnet ist, sowie eine Aufnahmeschale 4.

Die Montageplatte 2 ist das Mittel, das die Handyhalterung am Fahrzeug, beispielsweise auf der Konsole, befestigt. Zur Sicherheit der Insassen des Fahrzeugs befinden sich zwischen Montageplatte und Aufnahmeschale am Übergang des Schraubdomes 7 zur Montageplatte 2 Sollbruchstellen, wodurch bei einer definierten Mindestlast der zur Fahrgastzelle gelegene Teil der Handyhalterung, von der Montageplatte 2 abbricht. Somit kann eine Verletzung der Insassen durch weit herausstehende Teile ausgeschlossen werden.

Die Montageplatte 2 bleibt nach dem Abbrechen an der Konsole befestigt. Um eine Gefährdung der Insassen durch scharfe und spitze Kanten an der Montageplatte gering zu halten, sind die außengelegenen Kantenradien der Montageplatte 2 größer als 3,2 mm. So kann beispielsweise bei einem Unfall verhindert werden, daß Schnittverletzungen durch die Montageplatte 2 verursacht werden.

Am Schraubdom 7 der Montageplatte 2 wird mit Hilfe einer Schraube 8 der Kugelkopfadapter 3 befestigt. Der Kugelkopfadapter 3 läßt eine Einstellung der Handyhalterung in verschiedenen Winkeln zur Konsole zu. Daneben ist auch eine starre Befestigung der Handyhalterung auf der Montageplatte 2 denkbar.

Der Kugelkopfadapter 3 verbindet die Montageplatte 2 mit einem Zwischenelement 5. Auf der Rückseite des Zwischenelementes 5, hier nicht sichtbar, ist eine Vorrichtung, die in den Kugelkopfadapter 3 eingreift und diesen so befestigt. Des weiteren trägt das Zwischenelement eine mechanische Schnittstelle 9. Die Schnittstelle 9 ist in Form eines erhöhten Dreiecks ausgebildet. Dieses Dreieck greift in eine entsprechende Aussparung 14 der Aufnahmeschale 4. Die Schnittstelle 9 hat Standardmaße, um das Anbringen unterschiedlich gefertigter Aufnahmeschalen 4 auf einfache Weise zu ermöglichen.

Die Aufnahmeschale 4 wird durch eine translatorische Bewegung parallel zur Montageebene verriegelt. Zur federnden Lagerung der Aufnahmeschale 4 auf dem Zwischenelement 5 werden in entsprechende Ausnehmungen im Zwischenelement 5 und in der Aufnahmeschale 4 Federn 13 eingebracht.

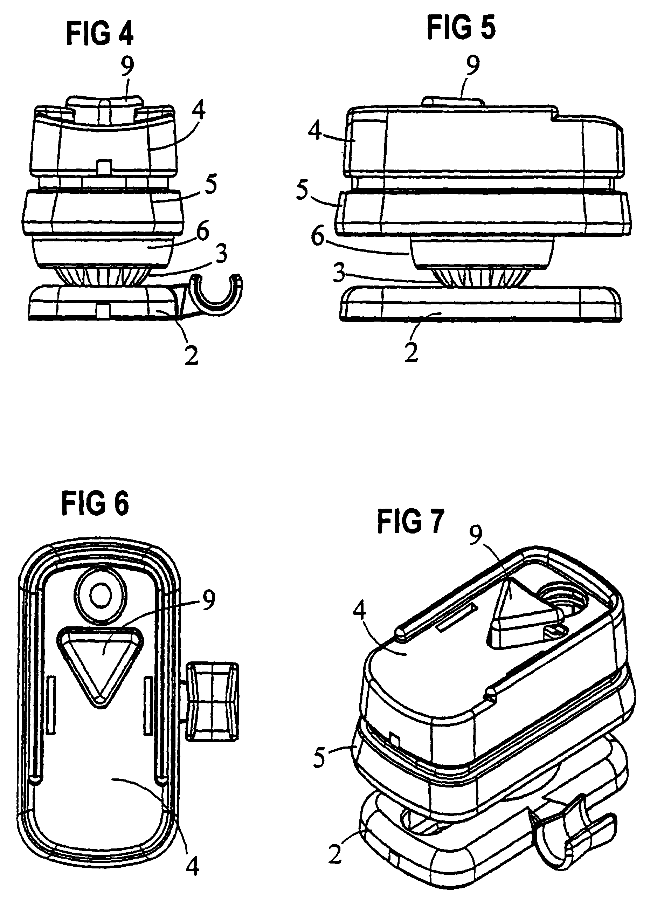

Das Klemmelement 6 zwischen der Montageplatte 2 und dem Zwischenelement 5 bewirkt eine Stabilisierung des Kugelkopfadapters 3. In zusammengebautem Zustand der Halterung ist lediglich der untere Teil des Klemmelementes 6, der die Form eines Ringes aufweist, sichtbar (siehe Figuren 4 und 5), der obere Teil des Klemmelementes 6 wird von dem Zwischenelement 5 verdeckt.

Zur Befestigung des Zwischenelementes 5 mit dem Klemmelement 6 wird eine Schraube 10, eine Scheibe 11 und eine Mutter 12 verwendet.

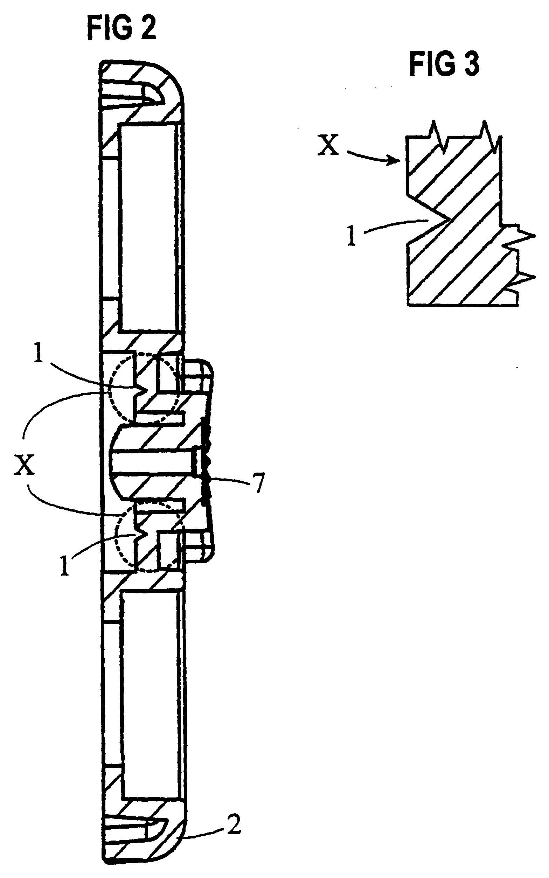

Figur 2 zeigt einen Querschnitt durch die Montageplatte 2. Die Verbindung zwischen der Montageplatte und der Aufnahmeschale stellt in diesem Ausführungsbeispiel der Schraubdom 7 dar. Am Übergang des Schraubdomes 7 zur Montageplatte 2 sind Kerben 1 angebracht, die die Sollbruchstelle definieren. Die markierten Bereiche X um die Kerben 1 sind in Figur 3 in einer Vergrößerung dargestellt. In diesem bevorzugten Ausführungsbeispiel sind die Kerben 1 an der Unterseite der Montageplatte 2 angebracht. Eine weitere Variante sieht die Kerbe 1 an der Oberseite der Montageplatte 2 vor. Diese Kerben 1 bewirken ein Abbrechen des zur Fahrgastzelle gelegenen Teils der Handyhalterung bei einer definierten Mindestlast. Die zur Fahrgastzelle gelegenen Teile sind hier die Aufnahmeschale 4, das Zwischenelement 5, der Kugelkopfadapter 3, das Klemmelement 6, der Schraubdom 7.

Figur 3 zeigt eine Vergrößerung des Ausschnittes X von Figur 2. Der Ausschnitt zeigt die Sollbruchstelle der Handyhalterung, die durch eine Kerbe 1 definiert ist. In dieser Ausführungsvariante ist die Kerbe 1 an der Unterseite der Verbindung zwischen Montageplatte und Aufnahmeschale angebracht. In einer weiteren Variante, die hier nicht gezeigt ist, ist das Anbringen der Kerbe 1 an der Oberseite der Verbindung denkbar. In diesem Fall wäre die Kerbe an dem rechten Rand des Ausschnittes X.

Die Figuren 4 bis 7 zeigen verschiedene Ansichten der erfindungsgemäßen Handyhalterung in zusammengebautem Zustand.

Figur 4 zeigt eine Seitenansicht auf die Schmalseite der erfindungsgemäßen Handyhalterung in zusammengebautem Zustand. Die Montageplatte 2 ist fest in der Fahrgastzelle montiert. Darauf befestigt ist der Kugelkopfadapter 3. Der Kugelkopfadapter 3 ermöglicht dem Benutzer ein Drehen und Kippen der Handyhalterung für eine bequemere Handhabung.

Das Klemmelement 6 stabilisiert den Kugelkopfadapter 3. In zusammengebautem Zustand ist von dem Klemmelement 6 lediglich dessen unterer Teil sichtbar. Der Rest des Klemmelementes 6 wird von dem Zwischenelement 5 verdeckt. Das Zwischenelement 5 weist eine mechanische standardisierte Schnittstelle 9 in Form eines erhöhten Dreieckes auf. Diese Schnittstelle 9 greift durch eine entsprechende Aussparung 14 in der Aufnahmeschale 4 der Handyhalterung.

Figur 5 zeigt eine Seitenansicht auf die Breitseite der zusammengebauten Handyhalterung. Der untere Teil des Klemmelementes 6 hat die Form eines Ringes, der dem Kugelkopfadapter 3 an seiner breitesten Stelle angepaßt ist. Hierdurch wird eine größere Bewegungsfreiheit der Handyhalterung auf der Nontageplatte 2 erreicht. In der Seitenansicht ist die standardisierte Schnittstelle 9 oberhalb der Aufnahmeschale 4 erkennbar.

In Figur 6 wird die zusammengebaute Handyhalterung in der Draufsicht gezeigt. Die standardisierte Schnittstelle 9 in Form eines Dreieckes ist in dieser Ansicht gut erkennbar.

Figur 7 zeigt eine Ansicht der zusammengebauten Handyhalterung von schräg oben. Die standardisierte Schnittstelle 9 befestigt die Aufnahmeschale 4 auf dem Zwischenelement 5. Dieser zur Fahrgastzelle gelegene Teil der Handyhalterung wird über den Kugelkopfadapter, hier nicht sichtbar, auf der Montageplatte 2 befestigt.

Insgesamt wird durch die Erfindung erreicht, daß einerseits eine freie Gestaltung der Handyhalterung möglich ist und andererseits die Sicherheit der Fahrzeuginsassen gewährleistet wird. Eine Verletzung der Insassen bei einem Unfall durch hervorstehende Teile wird durch ein Abbrechen der zum Fahrzeuginnenraum gelegenen Teile der Halterung aufgrund einer Sollbruchstelle bei einer Mindestlast erreicht. Darüber hinaus wird das Verletzungsrisiko bezüglich Schnittverletzungen durch große außen liegende Kantenradien des Befestigungsmittels der Handyhalterung, die nach dem Abbrechen im Fahrzeug befestigt bleibt, weiter verringert.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

## Patentansprüche

1. Handyhalterung zur Montage in einer Fahrgastzelle eines Kraftfahrzeugs, mit mindestens einer Aufnahmeschale (4) und mindestens einem Mittel zur Befestigung der Handyhalterung im Kraftfahrzeug, insbesondere an einem Armaturenbrett oder einer Konsole, **dadurch gekennzeichnet**, daß eine Verbindung zwischen dem mindestens einen Mittel zur Befestigung der Halterung und der Aufnahmeschale (4) eine Sollbruchstelle aufweist.

2. Handyhalterung gemäß dem voranstehenden Anspruch 1, **dadurch gekennzeichnet**, daß die Sollbruchstelle durch eine Kerbe (1) definiert wird, die bewirkt, daß bei einer definierten Mindestlast der zur Fahrgastzelle gelegene Teil der Handyhalterung von dem mindestens einen Mittel zur Befestigung abbricht.

3. Handyhalterung gemäß einem der voranstehenden Ansprüche 1 bis 2, **dadurch gekennzeichnet**, daß die Verbindung zwischen dem Mittel zur Befestigung und der Aufnahmeschale an der Oberseite und/oder an der Unterseite die Kerbe (1) aufweist.

4. Handyhalterung gemäß dem voranstehenden Anspruch 3, **dadurch gekennzeichnet**, daß die Verbindung zwischen dem Mittel zur Befestigung und der Aufnahmeschale einen Schraubdom (7) aufweist.

5. Handyhalterung gemäß einem der voranstehenden Ansprüche 1 bis 4, **dadurch gekennzeichnet**, daß das mindestens eine Mittel zur Befestigung der Halterung außengelegene Kanten mit ausreichend großen Radien, vorzugsweise Radien größer 3,2 mm, aufweist, um ein Verletzungsrisiko der Fahrzeuginsassen, insbesondere bezüglich Schnittwunden gering zu halten.

6. Handyhalterung gemäß einem der voranstehenden Ansprüche 1 bis 5, **dadurch gekennzeichnet**, daß das mindestens eine Mittel zur Befestigung der Halterung eine Montageplatte (2) darstellt.

7. Handyhalterung gemäß einem der voranstehenden Ansprüche 1 bis 6, **dadurch gekennzeichnet**, daß der zur Fahrgastzelle gelegene Teil der Handyhalterung ein Mittel zur Winkeleinstellung aufweist.

8. Handyhalterung gemäß dem voranstehenden Anspruch 7**, dadurch gekennzeichnet**, daß das Mittel zur Winkeleinstellung einen Kugelkopfadapter (3) aufweist.

9. Handyhalterung gemäß einem der voranstehenden Ansprüche 1 bis 8**, dadurch gekennzeichnet**, daß der zur Fahrgastzelle gelegene Teil der Handyhalterung ein Klemmelement (6) aufweist, zur Stabilisierung des Kugelkopfadapters (3).

10. Handyhalterung gemäß einem der voranstehenden Ansprüche 1 bis 9, **dadurch gekennzeichnet**, daß der zur Fahrgastzelle gelegene Teil der Handyhalterung ein Zwischenelement (5) mit einer mechanischen Schnittstelle zur Befestigung der Aufnahmeschale (4) aufweist.
